# EUROPEAN PATENT APPLICATION

(11) **EP 4 838 482 A1**
(43) Date of publication of application: **11.11.2026**
(21) Application number: 26176991.3
(22) Date of filing: 06.05.2026
(51) Int. Cl.: G06V 10/774, G06V 10/82, G06V 20/56

(54) **INFORMATION PROCESSING APPARATUS, INFORMATION PROCESSING METHOD, AND STORAGE MEDIUM**

(30) Priority: 09.05.2025 JP 2025078788
(71) Applicant: Toyota Jidosha Kabushiki Kaisha, Toyota-shi, Aichi-ken 471-8571 (JP)
(72) Inventor: OHSUGI, Masamichi, Chuo-Ku, 103-0022 (JP)
(74) Representative: D Young & Co LLP

(57) **Abstract**

An information processing apparatus comprises a controller (11) configured to: acquire a camera image captured by a camera (20) mounted on a mobile body, specify a first region where a first object is estimated to be present, in the camera image, calculate a probability of presence of the first object for each of a plurality of coordinates corresponding to the first region, and generate a machine learning model that outputs, together with the probability, a coordinate, in a predetermined space, at which the first object is estimated to be present, by performing training by taking a set of the plurality of coordinates corresponding to the first region as input data, and a set of the probability corresponding to each of the plurality of coordinates and a set of coordinates of the first object actually present in the predetermined space as ground truth data.

## Description

### BACKGROUND

### Technical Field

The present disclosure relates to a vehicle technology.

### Description of the Related Art

There is a technology for recognizing a lane line in real time while sensing a road environment (for example, Japanese Patent Laid-Open No. 2016-194815).

### SUMMARY

The present disclosure is aimed at increasing accuracy of object detection that uses a machine learning model.

The present disclosure in its one aspect provides an information processing apparatus comprising a controller configured to: acquire a camera image captured by a camera mounted on a mobile body, specify a first region where a first object is estimated to be present, in the camera image, calculate a probability of presence of the first object for each of a plurality of coordinates corresponding to the first region, and generate a machine learning model that outputs, together with the probability, a coordinate, in a predetermined space, at which the first object is estimated to be present, by performing training by taking a set of the plurality of coordinates corresponding to the first region as input data, and a set of the probability corresponding to each of the plurality of coordinates and a set of coordinates of the first object actually present in the predetermined space as ground truth data.

The present disclosure in its another aspect provides an information processing method performed by an information processing apparatus, the method comprising: acquiring a camera image captured by a camera mounted on a mobile body; specifying a first region where a first object is estimated to be present, in the camera image; calculating a probability of presence of the first object for each of a plurality of coordinates corresponding to the first region; and training a machine learning model that outputs, together with the probability, a coordinate, in a predetermined space, at which the first object is estimated to be present, by taking a set of the plurality of coordinates corresponding to the first region as input data, and a set of the probability corresponding to each of the plurality of coordinates and a set of coordinates of the first object actually present in the predetermined space as ground truth data.

As another aspect, a program for causing a computer to perform the information processing method described above, and a non-transitory computer-readable storage medium storing the program may be cited.

According to the present disclosure, accuracy of object detection that uses a machine learning model can be increased.

### BRIEF DESCRIPTION OF THE DRAWINGS

Figs. 1A to 1C are diagrams for describing a problem of the present disclosure;
Fig. 2 is a diagram for describing a problem of the present disclosure;
Fig. 3 is a schematic diagram of a vehicle system according to the present disclosure;
Fig. 4 is a diagram describing a configuration of a vehicle 1 and an onboard apparatus 10;
Fig. 5 is a diagram describing a configuration of a server apparatus 30;
Fig. 6 is a diagram describing a flow of data in a training phase;
Fig. 7 is a diagram describing a flow of data in an estimation phase;
Fig. 8 is a flowchart of processes performed by the onboard apparatus 10 in the training phase;
Fig. 9 is a flowchart of processes performed by the server apparatus 30 in the training phase; and
Fig. 10 is a flowchart of processes performed by the onboard apparatus 10 in the estimation phase.

### DESCRIPTION OF THE EMBODIMENTS

In recent years, studies are being conducted on an autonomous driving system of allowing a vehicle to travel autonomously along a route that is set in advance.

For example, an autonomous vehicle determines position and orientation of the subject vehicle by comparing a road map that is stored in advance and a result of sensing a road environment.

For example, the autonomous vehicle recognizes a position of a predetermined object on a road (typically, a lane line) based on an image (in the following, a camera image) acquired by each of a plurality of cameras that are mounted, and generates a scheduled trajectory by estimating a position of the subject vehicle based on a result of the recognition.

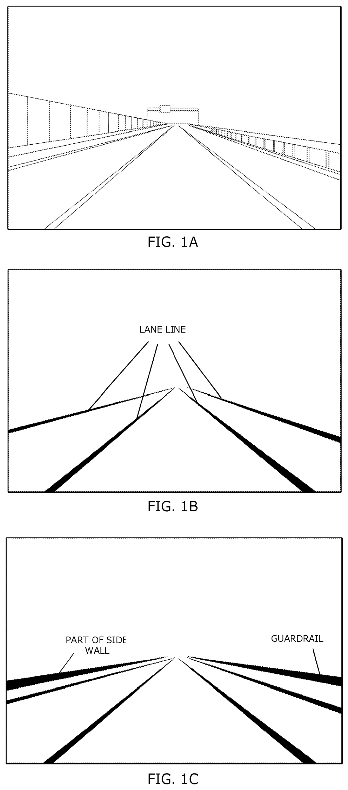

A position of an object such as a lane line can be recognized by an image processing technology. Fig. 1A is an example of a road scene captured by a camera provided on a front side of a vehicle. The illustrated road includes three lanes that are divided by four white lines (lane lines). Fig. 1B is a diagram illustrating a correct recognition result of the lane lines. For example, the autonomous vehicle can recognize that the road the vehicle is traveling includes three lanes, by recognizing four white lines as the lane lines.

However, when recognizing the lane line only by simple image processing, erroneous recognition may occur. For example, in the case where the illustrated road includes a white object such as a guardrail, a side wall, or a sign pole, such an object may be erroneously recognized as the lane line. Fig. 1C is an example in which white objects are simply extracted from an image. In this case, five lanes are possibly erroneously recognized, for example. When a lane line is erroneously recognized, a non-existent lane is recognized as being present, and safety of traveling is possibly impaired.

Furthermore, in the examples in Figs. 1A to 1C, the lane lines are drawn with straight lines, but a lane line is actually recognized as a set of a plurality of pixels, and depending on a quality of an image, a lane is sometimes not clearly recognized.

Accordingly, an attempt is being made to recognize an object by machine learning.

For example, by using a machine learning model trained by using an image acquired by an onboard camera as input data and correct position information of a lane line as ground truth data, a lane line can be accurately recognized based on a real-time camera image (for example, a vector image indicating a position of a lane line can be obtained).

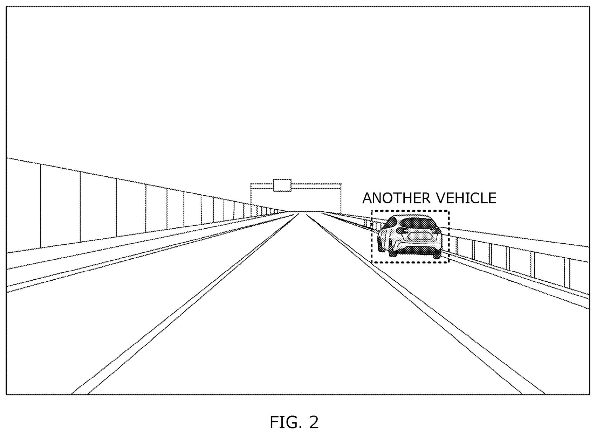

However, such a method also has a problem. For example, it is assumed, as illustrated in Fig. 2, that there is another vehicle on a road on which a vehicle that acquires an image for training is traveling. In this case, a lane line is hidden in a region indicated by a dotted line, but is present in the ground truth data, and thus, it is possible that input data (image) for training and the ground truth data may not match.

As described above, because various objects are present in an actual road environment, there may be cases where sufficient accuracy is not obtained even when training of a machine learning model is performed using images collected in such an environment.

An information processing apparatus according to the present disclosure solves such a problem.

An information processing apparatus according to an aspect of the present disclosure includes a controller configured to acquire a camera image captured by a camera mounted on a mobile body, specify a first region where a first object is estimated to be present, in the camera image, calculate a probability of presence of the first object for each of a plurality of coordinates corresponding to the first region, and generate a machine learning model that outputs, together with the probability, a coordinate, in a predetermined space, at which the first object is estimated to be present, by performing training by taking a set of the plurality of coordinates corresponding to the first region as input data, and a set of the probability corresponding to each of the plurality of coordinates and a set of coordinates of the first object actually present in the predetermined space as ground truth data.

The controller specifies the first region where the first object is estimated to be present, based on an image captured by the camera mounted on the mobile body. For example, in the case where the first object is a white lane line, the controller may extract, as the first region, a region formed from a set of white pixels, from a road surface in the image.

Furthermore, the controller calculates the probability of presence of the first object for each of the plurality of coordinates corresponding to the first region. The probability is a value indicating likelihood of the first object being present at a target coordinate.

For example, the probability can be calculated based on a result of simple analysis of an image. For example, in the case where the first object is a lane line, if the first region is formed from a plurality of bar-shaped regions extending toward a same coordinate (vanishing point), it can be said that the probability of the lane line existing at a plurality of coordinates in the region is high. By contrast, in the case where the first region has a shape that cannot be estimated to be the lane line (such as a square in the image, for example), it can be said that the probability of the lane line existing at a plurality of coordinates in the region is low.

Moreover, the controller performs training by taking a set of the plurality of coordinates corresponding to the first region as input data, and a set of the probability corresponding to each of the plurality of coordinates and a set of coordinates of the first object actually present in a predetermined space as ground truth data. A machine learning model that outputs, together with the probability, a coordinate, in the predetermined space, at which the first object is estimated to be present can thus be generated.

Additionally, "a plurality of coordinates corresponding to the first region" may be coordinates on the camera image, or may be coordinates that are obtained as a result of projecting the first region set on the camera image onto the predetermined space. Moreover, the predetermined space may be a three-dimensional space that is based on a mobile body.

Furthermore, the first object may be a lane line, and the controller may calculate the probability for each of the plurality of coordinates based on a shape of the first region. Because the lane line extends in a certain direction on an image, the probability can be estimated using a shape of the lane line.

Furthermore, the controller may specify, in the camera image, a second region where a second object different from the first object is estimated to be present, and in a case where there is a coordinate belonging to both the first region and the second region in the camera image, the controller may calculate a relatively lower probability for the coordinate than when the coordinate belongs only to the first region.

For example, in a case where a car traveling nearby overlaps with a lane line in an image, a region where "presence of a lane line" is estimated and a region where "presence of a car" is estimated may overlap each other. In such a case, the region including the car is possibly learnt as a part of the lane line.

Accordingly, in such a case, a relatively lower probability may be calculated for a coordinate belonging to both regions than when the coordinate belongs to only one of the regions. The controller may specify the second region by independent image analysis processing.

Furthermore, the controller may specify a third region having a predetermined image feature in the camera image, and at a time of calculation of the probability, in a case where there is a coordinate belonging to both the first region and the third region, the controller may calculate a relatively lower probability for the coordinate than when the coordinate belongs only to the first region.

The third region may be a region where accuracy of image recognition is possibly reduced, such as "a region where an average value of luminance is higher (lower) than a threshold" or "a region where an average value of saturation is lower than a threshold". For example, a region where presence of a lane line can be estimated but there is overexposure due to backlight or the like may be taken as the third region. The controller may specify the third region by independent image analysis processing. For example, the third region may be a region where a statistical value regarding at least one of a brightness, a saturation, or a hue satisfies a predetermined condition.

In the following, an embodiment of the present disclosure will be described with reference to the drawings. The configuration of the embodiment described below is merely an example, and the present disclosure is not limited to the configuration of the embodiment.

### (First Embodiment)

An outline of a vehicle system according to a first embodiment will be given. The vehicle system according to the present embodiment includes a vehicle 1 and a server apparatus 30.

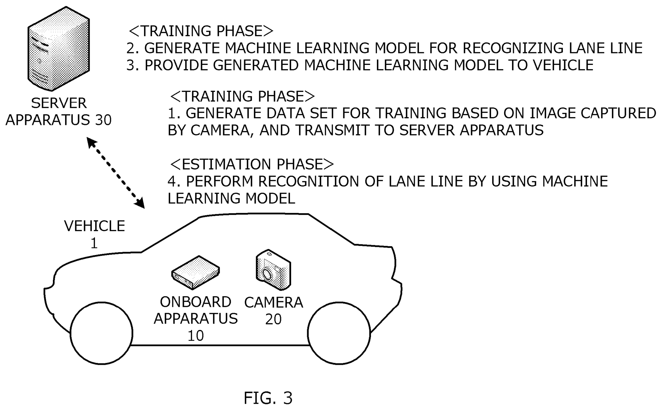

An outline of the system will be given with reference to Fig. 3.

The vehicle 1 is a connected car that is capable of autonomous driving. The vehicle 1 includes an onboard apparatus 10 and a plurality of cameras 20. The onboard apparatus 10 includes a function of recognizing a position of a lane line by using images acquired by the plurality of cameras 20 and a machine learning model stored in a storage device, and controlling autonomous driving of the vehicle 1 based on a result of the recognition.

The server apparatus 30 is an apparatus that generates the machine learning model to be used by the onboard apparatus 10, by machine learning.

The onboard apparatus 10 is capable of performing a phase in which data for training the machine learning model is collected and provided to the server apparatus 30 (training phase), and a phase in which autonomous driving is performed using the trained machine learning model generated by the server apparatus 30 (estimation phase).

In the training phase, the onboard apparatus 10 collects images for training the machine learning model via the plurality of cameras 20, and generates a data set including the images and transmits the same to the server apparatus 30.

The server apparatus 30 performs training of the machine learning model based on the data set, and provides the obtained machine learning model to the onboard apparatus 10.

The onboard apparatus 10 stores the trained machine learning model provided by the server apparatus 30, inputs images acquired by the plurality of cameras 20 to the machine learning model, and thus performs autonomous driving while recognizing the position of the lane line.

In the following description, an image captured by each of the plurality of cameras 20 of the vehicle 1 will be referred to as a "camera image". Furthermore, the machine learning model described above will be referred to as an "estimation model". The estimation model is a model for estimating the position of a lane line based on the camera image (or a feature based on the camera image).

### [Apparatus Configuration]

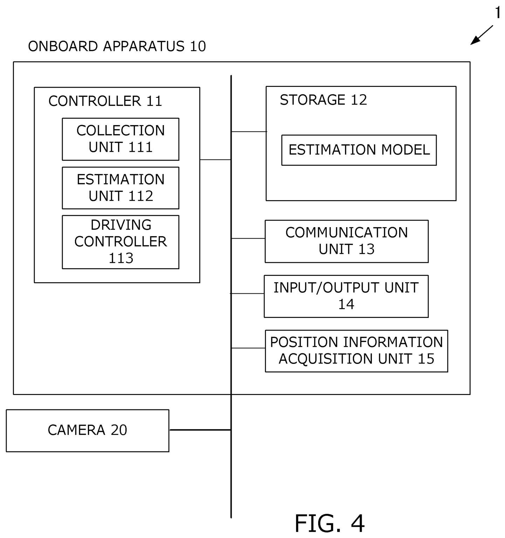

Fig. 4 is a diagram illustrating an example configuration of the vehicle 1. The vehicle 1 includes the onboard apparatus 10 and the plurality of cameras 20.

The onboard apparatus 10 can be configured as a computer including a processor (CPU, GPU, etc.), a main memory (RAM, ROM, etc.), and an auxiliary memory (EPROM, hard disk drive, removable medium, etc.). The auxiliary memory stores an operating system (OS), various programs, various tables and the like, and each function (software module) matching a predetermined object as described later can be implemented through execution of a program that is stored therein. However, one or some or all of functions may alternatively be implemented as a hardware module by a hardware circuit such as an ASIC or an FPGA, for example.

The onboard apparatus 10 includes a controller 11, a storage 12, a communication unit 13, an input/output unit 14, and a position information acquisition unit 15.

The controller 11 is an arithmetic unit that implements various functions of the onboard apparatus 10 by executing a predetermined program. For example, the controller 11 can be implemented by a hardware processor such as a CPU. Moreover, the controller 11 may include a RAM, a ROM (Read Only Memory), a cache memory, and the like.

The controller 11 includes three software modules, namely, a collection unit 111, an estimation unit 112, and a driving controller 113. Each software module may be implemented through execution of a program stored in the storage 12 described later by the controller 11 (CPU or the like).

The collection unit 111 collects images for training the estimation model, generates a data set for training based on the collected images, and transmits the data set to the server apparatus 30.

Furthermore, a trained estimation model is received from the server apparatus 30, and is stored in the storage 12 described later. A method of generating the data set for training will be described later.

The estimation unit 112 estimates the position of a lane line based on the estimation model stored in the storage 12 and images acquired by the plurality of cameras 20. In the present embodiment, the estimation unit 112 converts an acquired image into a feature, and inputs the obtained feature to the estimation model stored in the storage 12. The estimation model is a model dedicated to recognition of a lane line, and outputs position information of the lane line (or more specifically, a coordinate of the lane line in a three-dimensional coordinate system based on the subject vehicle).

The estimation unit 112 can thus recognize the position of a lane line in a periphery of the subject vehicle. A result of recognition of the lane line is transmitted to the driving controller 113.

The driving controller 113 controls autonomous driving of the subject vehicle based on the result of recognition of the lane line acquired from the estimation unit 112. For example, the driving controller 113 controls autonomous driving of the vehicle by using both the result of recognition of the lane line and a result of recognition of an obstacle generated by the estimation unit 112. For example, the driving controller 113 causes the subject vehicle to travel in such a manner that the subject vehicle travels along the lane and an obstacle does not enter a predetermined safe region centering on the subject vehicle.

Additionally, in the present embodiment, a method of recognizing the lane line will be mainly described, but an obstacle may also be recognized by any method.

The storage 12 is means for storing information, and is a storage medium such as a RAM, a magnetic disk, or a flash memory. A program to be executed by the controller 11, data to be used by the program, and the like are stored in the storage 12. Furthermore, the estimation model described above is stored in the storage 12.

The estimation model is a machine learning model for estimating the position of a lane line based on features obtained based on a plurality of camera images. A method of training the estimation model will be described later.

The communication unit 13 is a communication interface for connecting the onboard apparatus 10 to an external network. The communication unit 13 may include a module for performing cellular communication, and may provide connection to the external network via a cellular network.

The input/output unit 14 is a unit that receives an input operation performed by an onboard person of the vehicle, and that presents information to the onboard person, and is, in the present embodiment, one touch panel display, or in other words, a liquid crystal display and control means thereof, or a touch panel and control means thereof.

The position information acquisition unit 15 is a unit that acquires position information of the subject vehicle. For example, the position information acquisition unit 15 includes a GPS antenna and a positioning module for measuring the position information. The GPS antenna is an antenna that receives a positioning signal transmitted from a positioning satellite (also referred to as a GNSS satellite). The positioning module is a module that calculates the position information based on a signal received by the GPS antenna.

Additionally, with respect to a specific hardware configuration of the onboard apparatus 10, structural elements may be omitted, replaced or added as appropriate according to the embodiment. For example, the controller 11 may include a plurality of hardware processors. The hardware processors may be a microprocessor, an FPGA, a GPU, and the like. Moreover, an input/out device (such as an optical drive) other than those cited as examples may be added. Alternatively, the onboard apparatus 10 may be configured by a plurality of computers. In this case, the hardware configurations of the computers may be the same or different.

The camera 20 is a camera provided on the vehicle 1. Fig. 4 illustrates one camera 20, but the vehicle 1 includes a plurality of cameras 20 that are mounted on different positions. The plurality of cameras 20 may be mounted on such positions that entire surroundings of the vehicle 1 can be captured.

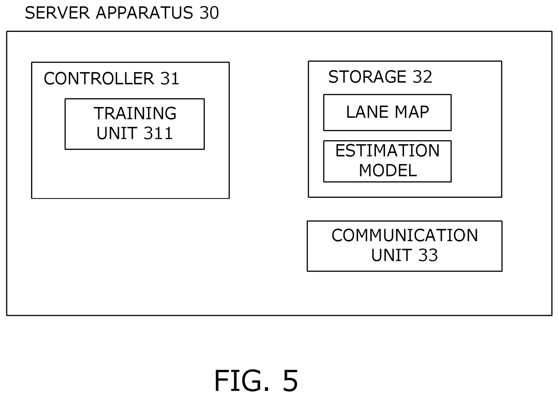

Fig. 5 is a diagram illustrating an example configuration of the server apparatus 30. The server apparatus 30 includes a controller 31, a storage 32, and a communication unit 33.

The controller 31 is an arithmetic unit that implements various functions of the server apparatus 30 by executing a predetermined program. For example, the controller 31 can be implemented by a hardware processor such as a CPU.

The controller 31 includes a training unit 311 as a software module. The software module may be implemented through execution of a program stored in the storage 32 described later by the controller 31 (CPU or the like).

The training unit 311 receives a data set for training the estimation model from the onboard apparatus 10, and trains the estimation model using the data set. A three-dimensional map (lane map) describing accurate position information of the lane line is stored in the server apparatus 30, and the training unit 311 trains the estimation model using the data set received from the onboard apparatus 10 and the position information of the lane line described in the lane map (description will be given later).

The storage 32 is means for storing information, and is a storage medium such as a RAM, a magnetic disk, or a flash memory. A program to be executed by the controller 31, data to be used by the program, and the like are stored in the storage 32. Furthermore, a trained estimation model and the lane map are stored in the storage 32.

The communication unit 33 is a communication interface for connecting the server apparatus 30 to an external network.

### [Training Phase of Estimation Model]

Next, a method of training the estimation model will be described.

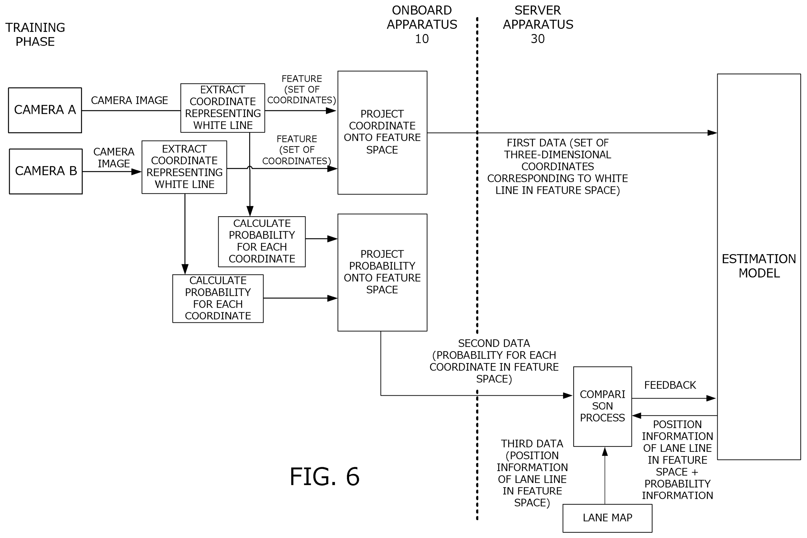

Fig. 6 is a diagram describing a flow of data in a phase in which a trained estimation model is generated (training phase). Additionally, a left side of a dotted line indicates processing performed by the onboard apparatus 10 (the collection unit 111), and a right side of the dotted line indicates processing performed by the server apparatus 30 (the training unit 311).

First, the onboard apparatus 10 acquires, from the plurality of cameras 20, camera images for training (for example, images captured by the vehicle 1 traveling on an actual road).

The onboard apparatus 10 performs predetermined processing on the acquired camera image, and converts the image into a feature. In the present embodiment, the feature is a set of two-dimensional coordinates of pixels that are estimated to represent a lane line in the camera image (pixels in "first region" in the present disclosure; for example, white pixels). The coordinates are represented on a two-dimensional coordinate system based on the camera.

Furthermore, the collection unit 111 integrates the features corresponding to respective cameras. Integration of the features can be performed by projecting, on a common three-dimensional space, a set of two-dimensional coordinates representing a white line obtained from each camera image. A projection target space is a three-dimensional space having a coordinate system that is based on the vehicle 1 (vehicle coordinate system). The space will be referred to as a feature space. Features after projection are a set of three-dimensional coordinates representing a position of the lane line in the feature space.

Here, the features after projection (a set of three-dimensional coordinates in the feature space) will be referred to as first data.

Separately from the processing described above, the collection unit 111 calculates a probability of presence of the lane line for each two-dimensional coordinate of pixels included in the first region.

Here, the following three methods are described as a method of calculating the probability for each coordinate.

### (A) Method Based on Shape of Region

For example, in the case where the first region is formed from a combination of a plurality of bar-shaped regions extending in a certain direction (vanishing point), it can be said that the probability that a lane line is present at a plurality of coordinates in the region is high. In this case, the collection unit 111 can calculate a probability that is higher than a predetermined value for the coordinates in the region.

By contrast, in the case where the first region has a shape that can hardly be said to represent a lane line, such as a square or a circle, it can be said that the probability that a lane line is present at a plurality of coordinates in the region is low. In this case, the collection unit 111 can calculate a probability that is lower than the predetermined value for the coordinates in the region.

### (B) Method Based on Overlapping of Object

For example, the collection unit 111 specifies a region (second region), in a target camera image, where presence of an object different from a lane line (such as another vehicle, a pedestrian, a bicycle, a construction, a puddle, or accumulated snow) is estimated.

If there is a coordinate in a camera image that belongs to both the first region and the second region, it can be said that the probability of presence of a lane line is lower for the coordinate than for a coordinate belonging only to the first region. By contrast, in the case where there is a coordinate in a camera image that belongs only to the first region, it can be said that the probability of presence of a lane line is higher for the coordinate than for a coordinate belonging to both the first region and the second region.

Accordingly, for example, in the case where each of a plurality of coordinates in the first region belongs only to the first region, the collection unit 111 can calculate a probability that is higher than the predetermined value for the target coordinate. Furthermore, in the case where each of a plurality of coordinates in the first region belongs to both the first region and the second region, a probability that is lower than the predetermined value can be calculated for the target coordinate.

### (C) Method Based on Visual Feature on Image

For example, the collection unit 111 specifies a region (third region) having a predetermined visual feature in a target camera image.

For example, the third region may be a region where accuracy of image recognition is possibly reduced, such as "a region where an average value of luminance is higher (lower) than a threshold" or "a region where an average value of saturation is lower than a threshold". Moreover, a region where a statistical value regarding at least one of a brightness, a saturation, or a hue satisfies a predetermined condition may be taken as the third region.

In the case where there is a coordinate in a camera image that belongs to both the first region and the third region, it can be said that the probability of presence of a lane line is lower for the coordinate than for a coordinate belonging only to the first region. By contrast, in the case where there is a coordinate in a camera image that belongs only to the first region, it can be said that the probability of presence of a lane line is higher for the coordinate than for a coordinate belonging to both the first region and the third region.

Accordingly, for example, in the case where each of a plurality of coordinates in the first region belongs only to the first region, the collection unit 111 can calculate a probability that is higher than a predetermined value for the target coordinate. Furthermore, in the case where each of a plurality of coordinates in the first region belongs to both the first region and the third region, a probability that is lower than the predetermined value can be calculated for the target coordinate.

Additionally, the onboard apparatus 10 may include means (for example, a software module) for detecting, from an image, a region where a predetermined object is present (such as a region where another vehicle is shown) or a region having a predetermined characteristic (such as a region where there is occurrence of halation).

The probability for each coordinate calculated in the above manner is projected onto the feature space in the same manner as the feature. Additionally, in the case where a plurality of probabilities are projected onto a same coordinate, an average value or a weighted average value may be determined. Integration of probability information for each coordinate is thus performed.

Here, a set of probabilities after projection (probability for each three-dimensional coordinate in the feature space) will be referred to as second data.

The onboard apparatus 10 transmits a set of the first data and the second data to the server apparatus 30 as the data set for training.

Additionally, at this time, the onboard apparatus 10 transmits position information of the vehicle 1 (for example, latitude and longitude on the world geodetic system) to the server apparatus 30. This is because the feature space is expressed by a local coordinate system (coordinate system based on the vehicle 1), and to acquire the ground truth data (accurate position information of the lane line) for training the estimation model, the server apparatus 30 has to be taught the position of the subject vehicle on a global coordinate system (for example, the world geodetic system).

After receiving the data set for training from the onboard apparatus 10, the server apparatus 30 acquires the ground truth data corresponding to the feature space. For example, the server apparatus 30 causes the lane map stored in advance and the coordinate in the feature space to overlap, by using the position information received from the vehicle 1, and acquires accurate position information of the lane line in the feature space (hereinafter "third data"). The third data is a set of coordinates at which the lane line is actually present in the feature space.

Then, the server apparatus 30 performs a process of training the estimation model using the first data as input data and the second and third data as the ground truth data.

As an estimation result, a set of coordinates of a lane line estimated to be present in the feature space (corresponding to the third data) and a set of probability at each coordinate (corresponding to the second data) are output from the estimation model. In the training, a result of comparison between the estimation result and the ground truth data (the second data and the third data) is fed back to the estimation model, and a parameter is updated in such a manner that a difference between the estimation result and the ground truth data becomes small.

According to the process described above, when a set of three-dimensional coordinates in the feature space is input, a machine learning model that outputs, together with the probability information, estimated position information of the lane line (set of coordinates) in the vehicle coordinate system can be obtained. The generated estimation model is distributed from the server apparatus 30 to the onboard apparatus 10. Distribution of the estimation model can be performed online or offline.

### [Estimation Process Based on Estimation Model]

A process of estimating the position of a lane line by using the estimation model obtained by the process described above will be described.

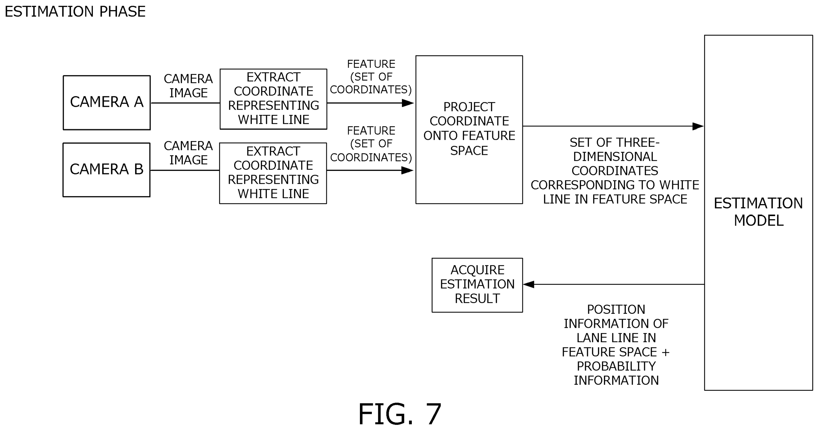

Fig. 7 is a diagram describing a method of estimating the position of a lane line by the onboard apparatus 10 by using a trained estimation model. As illustrated, when features obtained based on a plurality of images acquired by the onboard cameras are input to the estimation model, the position information of a lane line can be obtained. A generation method of the feature is the same as in the training phase. That is, also in the phase of estimation, as in the training phase, a process of integrating the features is performed, and the result is input to the estimation model.

The estimation model takes a set of three-dimensional coordinates in the feature space as an input, and outputs a set of coordinates, in the feature space, at which the lane line is estimated to be actually present, and a set of probabilities corresponding to respective coordinates. By referring to the same, the onboard apparatus 10 can determine a degree of probability for the estimated lane line.

The estimation unit 112 transmits, to the driving controller 113, the position information of the lane line (set of coordinates) and the probability information (set of probabilities corresponding to respective coordinates) output from the estimation model, and the driving controller 113 uses the same to control autonomous driving of the vehicle 1. For example, the driving controller 113 can determine whether the probability is high or low for the estimated position information of the lane line, and can control autonomous driving by using the result of determination. For example, the lane line is highly probably present at a part with a high probability, and thus, a greater weight can be applied in a generation process of a scheduled trajectory, and the lane line is probably not present at a part with a low probability, and thus, a smaller weight can be applied in the generation process of a scheduled trajectory.

### [Process Flowchart]

Next, a flow of processes performed by each apparatus will be described.

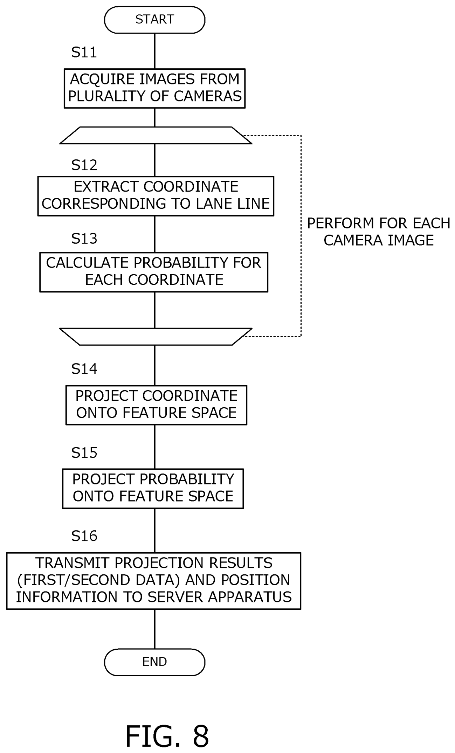

Fig. 8 is a flowchart of processes performed by the onboard apparatus 10 to generate a data set for training. The illustrated processes are periodically performed during traveling of the vehicle 1.

First, in step S11, the collection unit 111 acquires images from the plurality of cameras 20.

Processes in steps S12 and S13 are performed for each of a plurality of camera images obtained by the plurality of cameras 20.

In step S12, the collection unit 111 extracts, from a target image, pixels that are estimated to represent a lane line, and takes a set of corresponding two-dimensional coordinates as a feature.

Next, in step S13, the collection unit 111 calculates, for the feature obtained in step S12, or in other words, for each of the plurality of two-dimensional coordinates, a probability of presence of a lane line. The probability that a lane line is present at a specific coordinate on an image can be calculated by using the methods described in (A) to (C) described above, for example.

Next, in step S14, the collection unit 111 projects the feature generated in step S12 onto the feature space. The feature space is a three-dimensional space represented by a coordinate system that is based on the vehicle 1. Due to the process in the present step, the position of the lane line captured by each camera is projected onto the feature space.

Next, in step S15, the collection unit 111 projects the probability for each coordinate generated in step S14 onto the feature space. Due to the process in the present step, the probability corresponding to each coordinate projected in step S14 is projected onto the feature space.

Then, in step S16, the collection unit 111 transmits to the server apparatus 30, as the data set for training, the result of projection in step S14 (first data) and the result of projection in step S15 (second data). Additionally, in the present step, the collection unit 111 transmits to the server apparatus 30, at the same time as the data set, the position information of the subject vehicle (for example, latitude and longitude on the world geodetic system).

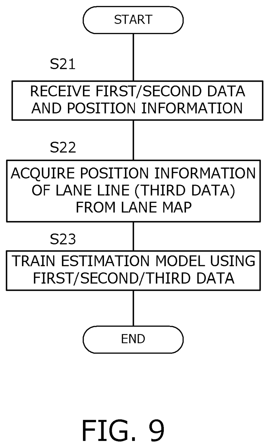

Fig. 9 is a flowchart of processes performed by the server apparatus 30 to train the estimation model based on the data set received from the onboard apparatus 10. For example, the illustrated processes are started when there is a transmission request for the data set from the onboard apparatus 10.

First, in step S21, the training unit 311 receives, from the onboard apparatus 10, the data set for training (set of first data and second data) and the position information of the vehicle 1.

Next, in step S22, the training unit 311 acquires the ground truth data (position information of the lane line) corresponding to the received data set, from the lane map that is stored. In the present step, the training unit 311 performs positioning between the feature space and the lane map based on the position information of the vehicle 1. An accurate coordinate at which the lane line is present in the feature space can thus be obtained.

In step S23, the training unit 311 trains a recognition model by taking the first data (that is, a set of coordinates in the feature space) as the input data, and the second data (that is, a set of probabilities corresponding to the coordinates) and the third data (that is, a set of coordinates indicating the accurate position of the lane line) as the ground truth data.

The recognition model obtained by training is distributed to the onboard apparatus 10.

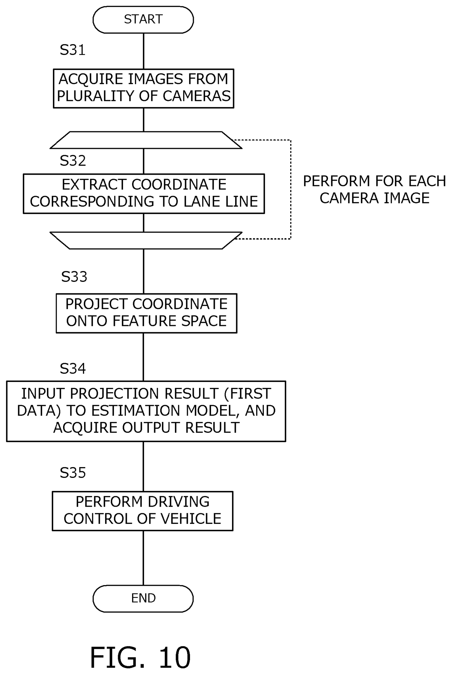

Fig. 10 is a flowchart of processes performed by the onboard apparatus 10 to recognize a lane line by using the recognition model acquired from the server apparatus 30. The illustrated processes are periodically performed during traveling of the vehicle 1.

First, in step S31, the estimation unit 112 acquires camera images from the plurality of cameras 20.

The process in step S32 is performed for each of a plurality of images obtained by the plurality of cameras.

In step S32, the estimation unit 112 extracts, from a target image, pixels that are estimated to represent a lane line, and takes a set of corresponding two-dimensional coordinates as a feature.

Next, in step S33, the estimation unit 112 projects the feature of each camera generated in step S32 onto a predetermined feature space.

In step S34, the estimation unit 112 inputs, to the estimation model, a set of three-dimensional coordinates representing the position of the lane line in the feature space, and acquires, as output, a set of coordinates representing the estimated position of the lane line and a set of probabilities at respective coordinates.

The set of coordinates obtained as a result of estimation is transmitted from the estimation unit 112 to the driving controller 113 together with the probability information, and is used to control autonomous driving of the vehicle 1.

As described above, the onboard apparatus 10 according to the first embodiment generates a data set for training an estimation model, based on images acquired by a plurality of cameras 20 mounted on the vehicle. At this time, the probability that a lane line is actually present is calculated for each coordinate corresponding to a lane line, and is used as data for training.

According to such a configuration, a machine learning model for outputting the probability of presence of a lane line together with a set of coordinates representing the position of the lane line can be obtained. Moreover, by using such a machine learning model, autonomous driving can be performed with higher accuracy.

Additionally, in the first embodiment, a camera image is converted into a feature, and features are integrated and input to the estimation model, but instead, a camera image itself may be input to the estimation model. In this case, input (first data) to the estimation model is a plurality of camera images. Additionally, as in the first embodiment, the second data may be information that is obtained by projecting the probability for each coordinate onto the feature space.

### (Modification)

The embodiment described above is merely an example, and the present disclosure may be changed as appropriate within the scope of the disclosure.

For example, processes and means described in the present disclosure can be freely combined to the extent that no technical conflict exists.

Furthermore, in the description of the embodiment, an example is cited in which the server apparatus 30 trains the estimation model based on the data set generated by the onboard apparatus 10; however, training of the estimation model may instead be performed by the onboard apparatus 10.

Furthermore, in the description of the embodiment, a lane line is described as an example of the target of recognition, but the target of recognition does not necessarily have to be a lane line. For example, any object on a road or an object that moves on a road may be taken as a recognition target.

Furthermore, a process that is described to be performed by one apparatus may be shared and performed by a plurality of apparatuses. Processes described to be performed by different apparatuses may be performed by one apparatus. Which function is to be implemented by which hardware configuration (server configuration) in a computer system may be flexibly changed.

The present disclosure may also be implemented by supplying computer programs for implementing the functions described in the embodiment described above to a computer, and by one or more processors of the computer reading out and executing the programs. Such computer programs may be provided to the computer by a non-transitory computer-readable storage medium that can be connected to a system bus of the computer, or may be provided to the computer through a network. The non-transitory computer-readable storage medium may be any type of disk including magnetic disks (floppy (registered trademark) disks, hard disk drives (HDDs), etc.) and optical disks (CD-ROMs, DVD discs, Blu-ray discs, etc.), read-only memories (ROMs), random access memories (RAMs), EPROMs, EEPROMs, magnetic cards, flash memories, optical cards, and any type of medium suitable for storing electronic instructions.

## Claims

1. An information processing apparatus comprising a controller (11) configured to:
acquire a camera image captured by a camera (20) mounted on a mobile body,
specify a first region where a first object is estimated to be present, in the camera image,
calculate a probability of presence of the first object for each of a plurality of coordinates corresponding to the first region, and
generate a machine learning model that outputs, together with the probability, a coordinate, in a predetermined space, at which the first object is estimated to be present, by performing training by taking a set of the plurality of coordinates corresponding to the first region as input data, and a set of the probability corresponding to each of the plurality of coordinates and a set of coordinates of the first object actually present in the predetermined space as ground truth data.

2. The information processing apparatus according to claim 1, wherein
the predetermined space is a three-dimensional space that is based on the mobile body, and
the controller (11) acquires the plurality of coordinates corresponding to the first region by projecting the first region onto the three-dimensional space.

3. The information processing apparatus according to claim 1, wherein
the first object is a lane line, and
the controller (11) calculates the probability for each of the plurality of coordinates based on a shape of the first region.

4. The information processing apparatus according to claim 1, wherein
the controller (11) specifies, in the camera image, a second region where a second object different from the first object is estimated to be present, and
in a case where there is a coordinate belonging to both the first region and the second region in the camera image, the controller (11) calculates a relatively lower probability for the coordinate than when the coordinate belongs only to the first region.

5. The information processing apparatus according to claim 1, wherein
the controller (11) specifies a third region having a predetermined visual feature in the camera image, and
at a time of calculation of the probability, in a case where there is a coordinate belonging to both the first region and the third region, the controller (11) calculates a relatively lower probability for the coordinate than when the coordinate belongs only to the first region.

6. The information processing apparatus according to claim 5, wherein the third region is a region where a statistical value regarding at least one of a brightness, a saturation, or a hue satisfies a predetermined condition.

7. An information processing method performed by an information processing apparatus, the method comprising:
acquiring a camera image captured by a camera (20) mounted on a mobile body;
specifying a first region where a first object is estimated to be present, in the camera image;
calculating a probability of presence of the first object for each of a plurality of coordinates corresponding to the first region; and
training a machine learning model that outputs, together with the probability, a coordinate, in a predetermined space, at which the first object is estimated to be present, by taking a set of the plurality of coordinates corresponding to the first region as input data, and a set of the probability corresponding to each of the plurality of coordinates and a set of coordinates of the first object actually present in the predetermined space as ground truth data.

8. The information processing method according to claim 7, wherein
the predetermined space is a three-dimensional space that is based on the mobile body, and
the plurality of coordinates corresponding to the first region are acquired by projecting the first region onto the three-dimensional space.

9. The information processing method according to claim 7, wherein
the first object is a lane line, and
the probability for each of the plurality of coordinates is calculated based on a shape of the first region.

10. The information processing method according to claim 7, wherein
a second region where a second object different from the first object is estimated to be present is specified in the camera image, and
in a case where there is a coordinate belonging to both the first region and the second region in the camera image, a relatively lower probability is calculated for the coordinate than when the coordinate belongs only to the first region.

11. The information processing method according to claim 7, wherein
a third region having a predetermined visual feature is specified in the camera image, and
at a time of calculation of the probability, in a case where there is a coordinate belonging to both the first region and the third region, a relatively lower probability is calculated for the coordinate than when the coordinate belongs only to the first region.

12. The information processing method according to claim 11, wherein the third region is a region where a statistical value regarding at least one of a brightness, a saturation, or a hue satisfies a predetermined condition.

13. A non-transitory storage medium storing a program for causing a computer to perform the information processing method according to claim 7.
